(19) Europäisches Patentamt
European Patent Office
Office européen des brevets

(11) **EP 4 031 752 B1**

(12) **EUROPÄISCHE PATENTSCHRIFT**

(45) Veröffentlichungstag und Bekanntmachung des Hinweises auf die Patenterteilung:
**02.08.2023  Patentblatt 2023/31**

(21) Anmeldenummer: **20765010.2**

(22) Anmeldetag: **02.09.2020**

(51) Internationale Patentklassifikation (IPC):
*F01D 17/10* *(2006.01)*     *F01D 25/30* *(2006.01)*
*F02C 6/12* *(2006.01)*       *F02C 9/18* *(2006.01)*

(52) Gemeinsame Patentklassifikation (CPC):
**F01D 17/105; F01D 25/30;** F05D 2220/40;
F05D 2250/713; F05D 2260/606; Y02T 10/12

(86) Internationale Anmeldenummer:
**PCT/EP2020/074471**

(87) Internationale Veröffentlichungsnummer:
**WO 2021/052759 (25.03.2021 Gazette 2021/12)**

(54) **KONZENTRISCHE EINLEITUNG DES WASTE-GATE-MASSENSTROMS IN EINEN STRÖMUNGSOPTIMIERTEN AXIALDIFFUSOR**

CONCENTRIC INTRODUCTION OF WASTE-GATE MASS FLOW INTO A FLOW-OPTIMIZED AXIAL DIFFUSER

INTRODUCTION CONCENTRIQUE D'UN FLUX MASSIQUE WASTE-GATE DANS UN DIFFUSEUR AXIAL À ÉCOULEMENT OPTIMISÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.09.2019  EP 19198053**

(43) Veröffentlichungstag der Anmeldung:
**27.07.2022  Patentblatt 2022/30**

(73) Patentinhaber: **Turbo Systems Switzerland Ltd.**
**5400 Baden (CH)**

(72) Erfinder:
• **MATHEY, Christoph**
**5442 Fislisbach (CH)**
• **SENN, Stephan**
**5236 Remigen (CH)**

(74) Vertreter: **Zimmermann & Partner**
**Patentanwälte mbB**
**Postfach 330 920**
**80069 München (DE)**

(56) Entgegenhaltungen:
EP-A2- 3 358 148     WO-A2-2011/002732
DE-A1- 3 101 131     DE-A1-102017 121 337
JP-U- S5 535 383     US-B1- 9 739 166

EP 4 031 752 B1

**Beschreibung**

TECHNISCHES GEBIET

Die Erfindung bezieht sich auf das Gebiet der Abgasturbolader für aufgeladene Brennkraftmaschinen. Insbesondere betrifft die Erfindung eine Abgasturbine mit strömungsoptimiertem Axialdiffusor, wie sie bei Abgasturboladern und auch bei Gasturbinen und Nutzturbinen verwendet werden kann.

TECHNISCHER HINTERGRUND

Für die Leistungssteigerung einer Brennkraftmaschine werden heutzutage standardmäßig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft können der Verbrennungsprozess und der Wirkungsgrad der Brennkraftmaschine optimiert werden.

Bei aus dem Stand der Technik bekannten Abgasturbinen von Abgasturboladern wird die Druckrückgewinnung am Abgasturbinenausgang typischerweise mittels Diffusoren realisiert, die beispielsweise ringförmig und auf gerade Weise konisch ausgebildet sein können. Ferner ist typischerweise zur Verbesserung der Druckrückgewinnung an der Nabe des Turbinenrads ein sich nicht drehendes, kegelartiges Bauelement angebracht.

Es hat sich herausgestellt, dass bei derartigen aus dem Stand der Technik bekannten Diffusoren von Abgasturbinen die Druckrückgewinnung noch verbesserungswürdig ist. Ferner hat sich herausgestellt, dass die konventionellen Diffusoren gewisse Nachteile hinsichtlich Komplexität, Bauraumgröße, und Kosten aufweisen.

Aus der DE 10 2017 121 337 A1 ist eine Abgasturbine bekannt, welche ein Turbinenrad mit einer Vielzahl von Laufschaufeln, einen Abgasaustrittskanal, welcher stromabwärts der Laufschaufeln des Turbinenrades angeordnet ist, wobei der radial außen durch einen axialen Turbinendiffusor und radial innen, zumindest teilweise durch einen Spinner begrenzt ist. Dabei sind der axiale Turbinendiffusor und der Spinner jeweils aus einer Anzahl von aufeinanderfolgenden konischen Diffusor-Segmenten ausgebildet.

Aus der EP 3 358 148 A2 ist eine Abgasturbine bekannt, die ein Turbinenrad, einen Abgasaustrittskanal, einen stromabwärts des Turbinenrades angeordneten, den Abgasaustrittskanal radial außen begrenzenden und sich radial nach außen öffnenden Diffusor und einen Wastegatekanal aufweist, dessen Ausgangsbereich in den Abgasaustrittskanal mündet.

Aus der US 9,739,166 B1 ist eine Abgasturbine bekannt, bei welcher ein Wastegate-Massenstrom unter einem kleinen Winkel direkt in den Abgasausgangskanal der Turbine eingespritzt wird.

Aus der JP S55 35383 U ist eine Abgasturbine bekannt, bei welcher ein Wastegate-Massenstrom unter einem kleinen Winkel oder parallel direkt in den Abgasausgangskanal der Turbine eingespritzt wird.

Aus der DE 31 01 131 A1 ist eine Abgasturbine bekannt, bei welcher ein Wastegate-Massenstrom unter einem Winkel kleiner als 10° in den Abgasausgangskanal der Turbine eingespritzt wird.

Heute werden Verbrennungsmotoren, insbesondere Großmotoren, vermehrt mit quasigleichdruckähnlichen Abgassammlern in Einrohrausführung ausgerüstet. Diese Abgassammler bedingen in Verbindung mit Abgasturboladern einen Einsatz von möglichst kleinen Turboladerturbinen, um einen thermisch beherrschbaren Betrieb bei Teillast und bei einer Lastaufschaltung bzw. Beschleunigung sicherzustellen. Kleine Turboladerturbinen können aber im oberen Lastbetrieb und bei Volllast zu unzulässig hohen Ladedrücken führen, die zu einer nachhaltigen Schädigung des Turboladers und des Grundmotors führen können. Um diesen zu hohen Ladedrücken vorzubeugen, werden Abblaseventile, sogenannte Wastegates, sowohl auf der Luft- als auch auf der Abgasseite eingesetzt. Der durch ein derartiges Wastegate geleitete Wastegatemassenstrom wird üblicherweise mit Ausnahme bei Gasmotoren in Pre-Mix-Ausführung direkt nach dem Turbolader-Turbinenaustritt wieder in das Abgassystem zurückgeführt. Dadurch, dass der Wastegatemassenstrom nicht für die Aufladung des Motors genutzt wird, kommt es zu einer Verschlechterung des Brennstoffverbrauchs des Motors.

Bedingt durch die konstruktive Ausbildung der Rückführung des Wastegatemassenstroms in das Abgassystem, sei es durch die Ausführung des Anschlusses selbst oder durch die plötzliche Erweiterung des Austrittskanals auch bei einer Ausführung mit einer geführten Strömung des Abgasmassenstroms, kommt es zu einer Störung des Abstroms aus der Turboladerturbine. Diese Störung beeinträchtigt das Betriebsverhalten der Turbine. Diese Beeinträchtigung kann sowohl mechanischer Art in Form einer Schwingungsanregung der Turbinenschaufeln als auch in Form von Wirkungsgradverlusten vorliegen. Diese Auswirkungen sind insbesondere bei Anwendungen mit als Diffusor ausgebildetem Gasaustrittsgehäuse besonders negativ.

KURZE DARSTELLUNG DER ERFINDUNG

Die Aufgabe der vorliegenden Erfindung besteht darin, eine Abgasturbine mit einem Diffusor bereitzustellen, die gegenüber den aus dem Stand der Technik bekannten Abgasturbinen verbessert ist.

Zur Lösung der obengenannten Aufgabe wird eine Abgasturbine gemäß dem unabhängigen Anspruch 1 bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird eine Abgasturbine bereitgestellt, die ein Turbinenrad mit einer Vielzahl von Laufschaufeln und einen Abgasaustrittskanal aufweist. Der Abgasaustrittskanal ist stromabwärts der Laufschaufeln des Turbinenrades angeordnet. Der Abgasaustrittskanal ist radial außen durch einen axialen Turbinendiffusor begrenzt. Durch den Abgasaustrittskanal ist ein Abgasmassenstrom in einer axialen Strömungsrichtung ausgebbar. Der axiale Turbinendiffusor öffnet sich stromabwärts radial nach außen mit nichtkonstantem Diffusor-Öffnungswinkel derart, dass ein erster Diffusor-Öffnungswinkel von einem zweiten Diffusor-Öffnungswinkel um mindestens 1° abweicht. Weiterhin umfasst die Abgasturbine einen Wastegatekanal, durch welchen ein Wastegatemassenstrom in den Abgasmassenstrom einblasbar ist. Der Wastegatekanal ist zum Erzeugen einer im Wesentlichen axialen Strömungsrichtung des Wastegatemassenstroms am Ausgangsbereich des Wastegatekanals ausgebildet. Der Ausgangsbereich des Wastegatekanals mündet in den Diffusor oder direkt stromabwärts in den Abgasaustrittskanal. Der Turbinendiffusor weist einen ersten Diffusor-Abschnitt mit ansteigendem Diffusor-Öffnungswinkel und einen gegenüber dem ersten Diffusor-Abschnitt stromabwärts gelegenen zweiten Diffusor-Abschnitt mit absinkendem Diffusor-Öffnungswinkel auf. In einem Übergangsbereich zwischen dem Turbinendiffusor und der radialen Innenwand des Wastegatekanals liegt ein Übergangswinkel vor, der kleiner ist als 5°. Die im Wesentlichen axiale Strömungsrichtung des Wastegatemassenstroms ist derart zu verstehen, dass eine Abweichung von der axialen Strömungsrichtung kleiner als 5° ist.

Gemäß einem Aspekt der Erfindung erfolgt die Einblasung des Wastegatemassenstroms in den Abgasmassenstrom entlang des Umfangs des Wastegatekanals konzentrisch zu einer Rotationsachse des Turbinenrads oder segmentweise konzentrisch zur Rotationsachse des Turbinenrads oder durch Bohrungen des Turbinendiffusors, die voneinander beabstandet entlang des Umfangs des Wastegatekanals vorgesehen sind.

Gemäß einem Aspekt der Erfindung verläuft der stromabwärtsseitige, radial außenliegende Endbereich des Turbinendiffusors konzentrisch zur Rotationsachse des Turbinenrads.

Gemäß einem Aspekt der Erfindung bildet der stromabwärtsseitige, radial außenliegende Endbereich des Turbinendiffusors einen radial innenliegenden Endbereich des Wastegatekanals.

Gemäß einem Aspekt der Erfindung übersteht der radial außenliegende Endbereich des Wastegatekanals den radial innenliegenden Endbereich des Wastegatekanals in Stromabwärtsrichtung.

Gemäß einem Aspekt der Erfindung weist der axiale Turbinendiffusor eine Anzahl N >1 von aufeinanderfolgenden konischen Diffusorsegmenten auf.

Gemäß einem Aspekt der Erfindung ist der Abgasaustrittskanal radial innen teilweise durch einen Spinner begrenzt.

Gemäß einem Aspekt der Erfindung ist der Spinner als integrales Bauteil des Turbinenrads ausgeführt.

Gemäß einem Aspekt der Erfindung ist der Spinner als separates Bauteil auf die Turbinenradnabe aufgeschrumpft oder aufgeschraubt oder aufgepresst oder aufgecincht.

Gemäß einem Aspekt der Erfindung weist der Spinner eine Anzahl P ≥ 1 von aufeinanderfolgenden konischen Spinnersegmenten auf.

Gemäß einem Aspekt der Erfindung ist der Übergangsbereich zwischen dem Turbinendiffusor und der radialen Innenwand des Wastegatekanals abgerundet ausgebildet.

Gemäß einem Aspekt der Erfindung öffnet sich der axiale Turbinendiffusor stromabwärts radial nach außen mit nichtkonstantem Diffusor-Öffnungswinkel derart, dass der Außenmantel des Turbinendiffusors in Axialrichtung einen S-förmigen Verlauf oder einen aus Segmenten gebildeten S-förmigen Verlauf aufweist. Der Turbinendiffusor weist nämlich einen ersten Diffusor-Abschnitt mit ansteigendem Diffusor-Öffnungswinkel und einen gegenüber dem ersten Diffusor-Abschnitt stromabwärts gelegenen zweiten Diffusor-Abschnitt mit absinkendem Diffusor-Öffnungswinkel auf. Dadurch wird ermöglicht, das durch den Diffusor tretende Gas auf kurzer Wegstrecke zu entspannen und somit eine hohe Entspannung bei kurzer Baulänge zu erreichen. Gleichzeitig wird ein laminares und daher behinderungsarmes Abströmen ermöglicht. Gemäß einem Aspekt der Erfindung ist der Wastegatekanal durchströmbar oder nicht durchströmbar.

Gemäß einem Aspekt der Erfindung weist ein Abgasturbolader eine mit den erfindungsgemäßen Merkmalen ausgestattete Abgasturbine auf.

Dadurch, dass der Ausgangsbereich des Wastegatekanals in den Diffusor oder direkt stromabwärts in den Abgasaustrittskanal mündet, ist der Ausgangsbereich des Wastegatekanals im Bereich des Diffusors oder unmittelbar stromabwärts benachbart an den Diffusor angeordnet. Der Eintritt des Abgases aus dem Wastegatekanals erfolgt somit an einer Stelle ein, an der der Gasfluss zumindest teilweise entspannt und gleichzeitig noch im Wesentlichen laminar ist. Gleichzeitig wird eine kompakte Anordnung ermöglicht.

Dadurch, dass in einem Übergangsbereich zwischen dem Turbinendiffusor und der radialen Innenwand des Wastegatekanals ein Übergangswinkel von kleiner als 5° vorliegt, wird ermöglicht, dass ein im Wesentlichen laminarer und daher behinderungsarmer Abfluss auch bei Einströmen von Abgas aus dem Wastegatekanal weitgehend aufrechterhalten werden kann.

Somit wird in vorteilhafter Weise eine Abgasturbine bereitgestellt, bei welcher durch eine spezielle Ausgestaltung der Zuführung des Wastegatemassenstroms stromabwärts der Turbine gewährleistet wird, dass ein ungehindertes Abströmen des Abgasmassenstroms durch die Turbine erfolgen kann. Eine negative Rückwirkung in Form von Turbinenschaufelvibrationen wird dadurch ausgeschlossen, dass es zu keiner Behinderung des Abströmens kommen kann. Durch die beanspruchte spezielle Ausgestaltung wird die Wirkung des Diffusors positiv beeinflusst. Weitere Vorteile der Erfindung bestehen darin, dass eine mit den erfindungsgemäßen Merkmalen ausgestattete Abgasturbine in einfacher und kostengünstiger Weise konstruktiv ausführbar ist. Bestehende Komponenten können bei Bedarf mit nur geringem Mehraufwand modifiziert werden. Zur Realisierung der Erfindung bedarf es nur weniger neuer Elemente.

## KURZBESCHREIBUNG DER FIGUREN

Im Weiteren soll die Erfindung anhand von in den Figuren gezeigten Ausführungsbeispielen erläutert werden, aus denen sich auch weitere Vorteile und Abwandlungen ergeben.

Die Figur 1 zeigt eine schematische longitudinale Schnittansicht eines Teilbereichs einer Abgasturbine zur Veranschaulichung eines ersten Ausführungsbeispiels für die Erfindung.

Die Figur 2 zeigt eine schematische Schnittansicht eines Abgasaustrittskanals einer Abgasturbine zur Veranschaulichung eines zweiten Ausführungsbeispiels für die Erfindung.

Die Figur 3 zeigt eine schematische Schnittansicht eines Abgasaustrittskanals einer Abgasturbine zur Veranschaulichung eines dritten Ausführungsbeispiels für die Erfindung.

## DETAILLIERTE BESCHREIBUNG DER FIGUREN

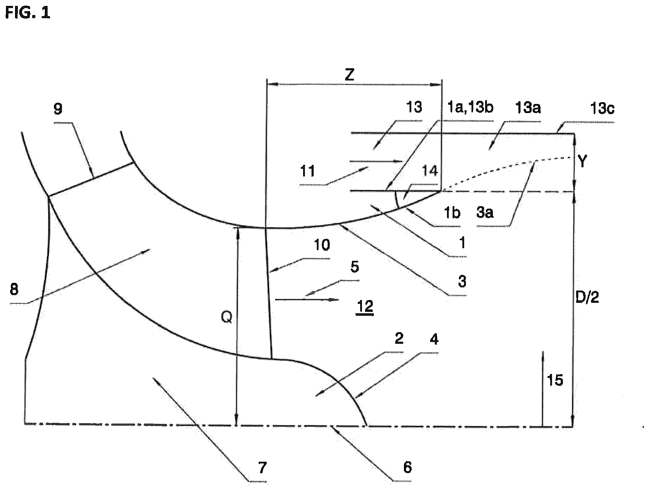

Die Figur 1 zeigt eine schematische longitudinale Schnittansicht eines Teilbereichs einer Abgasturbine zur Veranschaulichung eines ersten Ausführungsbeispiels für die Erfindung.

Insbesondere zeigt die Figur 1 ein Turbinenrad 7 mit einer axialen Rotationsachse 6, um welche das Turbinenrad 7 drehbar gelagert ist. Das Turbinenrad 7 weist typischerweise eine Vielzahl von Laufschaufeln 8 auf, wobei in dem in Figur 1 dargestellten Ausschnitt beispielhaft nur eine Laufschaufel 8 gezeigt ist. Das hierin beschriebene Diffusorkonzept kann auf Mixed-Flow Turbinen, Radialturbinen und Axialturbinen angewendet werden, ist jedoch nicht auf Mixed-Flow Turbinen, Radialturbinen und Axialturbinen beschränkt.

Die Laufschaufeln 8 des Turbinenrads 7 umfassen typischerweise eine Vorderkante 9 und eine Hinterkante 10. Die Vorderkante 9 der Laufschaufeln 8 ist diejenige Kante der Laufschaufeln, auf welche das Abgas bei Betrieb der Abgasturbine zuströmt. Die Hinterkante 10 der Laufschaufeln 8 ist diejenige Kante der Laufschaufeln, von welcher das Abgas bei Betrieb der Abgasturbine abströmt. Die Strömungsrichtung 5 des Abgases ist in Figur 1 mit einem Pfeil eingezeichnet.

Wie beispielhaft in der Figur 1 gezeigt ist, umfasst die erfindungsgemäße Abgasturbine einen Abgasaustrittskanal 12, welcher stromabwärts der Laufschaufeln 8 des Turbinenrades 7 angeordnet ist. Der Abgasaustrittskanal 12 ist radial außen durch einen axialen Turbinendiffusor 1 begrenzt. Ferner ist der Abgasaustrittskanal 12 radial innen teilweise durch einen Spinner 2 begrenzt. Gemäß einer Ausführungsform, die mit anderen hierin beschriebenen Ausführungsformen kombiniert werden kann, ist der axiale Turbinendiffusor 1 statisch, d.h. nicht drehend, ausgeführt. Ferner kann der Spinner 2 rotierbar ausgeführt sein. Es kann auch auf einen Spinner verzichtet werden.

Wie beispielhaft in der Figur 1 dargestellt ist, öffnet sich der Turbinendiffusor 1 radial nach außen mit nichtkonstantem Diffusor-Öffnungswinkel. Unter einem Diffusor-Öffnungswinkel ist dabei der lokale Winkel der Diffusorwand relativ zur Rotationsachse 6 zu verstehen. Die den Abgasaustrittskanal 12 begrenzende Diffusorkontur 3, 3a ist S-förmig ausgebildet. Dies erlaubt es, den von der Abgasturbine ausgegebenen Abgasmassenstrom mit einem Wastegatemassenstrom im Wesentlichen parallel zusammenzuführen, vorzugsweise unter einem Winkel, der kleiner ist als 5°. Dies schafft eine Voraussetzung dafür, dass der Wastegatemassenstrom derart einströmen kann, dass einer Ablösung des Abgasmassenstroms entgegengewirkt wird.

Wie aus der Figur 1 hervorgeht, stellt die Diffusorkontur 3 die radial äußere Begrenzung des Abgasaustrittskanals 12 dar. Der Spinner 2 umfasst eine Spinnerkontur 4. Wie aus der Figur 1 des Weiteren hervorgeht stellt die Spinnerkontur 4 eine radial innere Begrenzung des Abgasaustrittskanals 12 dar. Die radiale Richtung ist in den Figuren 1-3 mit der Bezugszahl 15 gekennzeichnet. "Radial nach innen gerichtet" bedeutet zur Rotationsachse 6 bzw. Symmetrieachse des Abgasaustrittskanals hin gerichtet. "Radial nach Außen gerichtet" bedeutet von der Rotationsachse 6 bzw. Symmetrieachse des Abgasaustrittskanals weg gerichtet.

Gemäß einer Ausführungsform, die mit anderen hierin beschriebenen Ausführungsformen kombiniert werden kann, kann der Spinner 2 als integrales Bauteil des Turbinenrads 7 ausgeführt sein, wie es beispielhaft in der Figur 1 gezeigt ist. Alternativ kann der Spinner 2 beispielsweise als separates Bauteil (nicht explizit dargestellt) ausgeführt sein, welches mit dem Turbinenrad verbunden sein kann. Demnach kann sich der Spinner 2 im Betrieb der Abgasturbine mit dem Turbinenrad 7 mitdrehen. Er dreht sich somit mit der gleichen Rotationsgeschwindigkeit wie das Turbinenrad. Der Spinner 2 kann in axialer Richtung bis auf die Höhe des Ausgangsbereichs 13a des Wastegatekanals 13 reichen oder sogar darüber hinaus.

Des Weiteren weist die in der Figur 1 dargestellte Abgasturbine einen Wastegatekanal 13 auf, durch welchen ein Wastegatemassenstrom in den Abgasmassenstrom einblasbar ist. Der Ausgangsbereich 13a des Wastegatekanals 13 ist stromabwärts des Turbinendiffusors 1 angeordnet. Die Einblasung des Wastegatemassenstroms in den Wastegatemassenstrom erfolgt in axialer Strömungsrichtung 11, die mit der axialen Strömungsrichtung 5 des Abgasmassenstroms übereinstimmt. Darüber hinaus erfolgt die Einblasung des Wastegatemassenstroms konzentrisch zur Rotationsachse 6 des Turbinenrads 7.

Aus der Figur 1 ist auch ersichtlich, dass der stromabwärtsseitige, radial außenliegende Endbereich 1a des Turbinendiffusors 1 konzentrisch zur Rotationsachse 6 des Turbinenrads 7 verläuft. Bei dieser konzentrischen Einblasung handelt es sich bei der punktiert gezeichneten Diffusorkontur 3a um eine fiktive Diffusorkonturlinie, entlang welcher der Wastegatemassenstrom in den Abgasmassenstrom eingeblasen wird.

Der stromabwärtsseitige, radial außenliegende Endbereich 1a des Turbinendiffusors 1 bildet ferner einen radial innenliegenden Endbereich 13b des Wastegatekanals 13. Dieser radial innenliegende Endbereich 13b des Wastegatekanals 13 kann parallel zur Rotationsachse 6 verlaufen. Sein Verlauf kann aber auch in einem kleinen Winkel von beispielsweise 1° vom genannten parallelen Verlauf abweichen.

Darüber hinaus ist in der Figur 1 veranschaulicht, dass der radial außenliegende Endbereich 13c des Wastegatekanals 13 den radial innenliegenden Endbereich 13b des Wastegatekanals 13 in Stromabwärtsrichtung übersteht.

Ferner geht aus der Figur 1 hervor, dass der stromabwärtsseitige, radial außenliegende Endbereich 1a des Turbinendiffusors 1 und damit auch der radial innenliegende Endbereich 13b des Wastegatekanals 13 mit dem stromabwärtsseitigen, radial innenliegende Endbereich 1b des Turbinendiffusors 1 einen Übergangswinkel 14 einschließt, der kleiner ist als 5°. Diese Wahl des Übergangswinkels 14 in Verbindung mit der beschriebenen Diffusorkontur ermöglicht ein verwirbelungsfreies Einblasen des Wastegatemassenstroms in den Abgasmassenstrom und damit ein ungehindertes Abströmen des Abgasmassenstroms durch den Abgasaustrittskanal 12.

Der Übergangswinkel kann durch den Winkel zwischen den Seitenwänden im Endbereich (Mündungsbereich) 1a des Turbinendiffusors 1 sowie im Endbereich (Mündungsbereich) 1b des Turbinendiffusors 1 definiert werden, wie in Fig. 1 dargestellt.

Für das Verhältnis der Gesamtlänge Z des Diffusors zum Aussenradius Q am Turbinenrotoraustritt gilt die folgende Beziehung:

$$Z/Q < 4.$$

Des Weiteren ist für das Verhältnis des Außendurchmessers D des Diffusors zur Wastegateöffnung Y am Ausgang des Diffusors die folgende Beziehung vorteilhaft:

$$0 < Y/(D/2) < 0{,}15.$$

Vorstehend beschrieben wurde eine Ausführungsform, bei der die Einblasung des Wastegatemassenstroms in den Abgasmassenstrom entlang des gesamten Umfangs konzentrisch zur Rotationsachse des Turbinenrads erfolgt. Alternativ dazu kann die Einblasung des Wastegatemassenstroms in den Abgasmassenstrom auch segmentweise konzentrisch zur Rotationsachse des Turbinenrads vorgenommen werden. Eine weitere Alternative besteht darin, die Einblasung des Wastegatemassenstroms in den Abgasmassenstrom durch Bohrungen im Turbinendiffusor vorzunehmen, die voneinander beabstandet entlang des Umfangs des Wastegatekanals vorgesehen sind. Der Ausgangsbereich 13a des Wastegatekanals 13 kann eine regelmäßig oder unregelmäßig entlang des Umfangs verteilte Serie von Löchern oder Schlitzen aufweisen oder ein nicht unterbrochener Ringkanal sein.

Durch die vorstehend beschriebene Ausgestaltung der Zuführung des Wastegatemassenstroms stromab der Turboladerturbine in den Abgasmassenstrom wird gewährleistet, dass ein ungehindertes Abströmen des Massenstroms durch die Turbine erfolgen kann. Eine negative Rückwirkung in Form von Turbinenschaufelvibrationen wird dadurch ausgeschlossen, dass es zu keiner Behinderung des Abströmens kommt. Durch die beschriebene konstruktive Ausgestaltung wird sowohl die Wirkung des Diffusors als auch die Wirkung des Spinners positiv beeinflusst.

Oben wurde beschrieben, dass die Zuführung des Wastegatemassenstroms in den Abgasmassenstrom konzentrisch zur Rotationsachse des Turbinenrads erfolgt.

Gemäß einer Ausführungsform der Erfindung ist der Wastegatekanal durchströmbar oder nicht durchströmbar. Bei nicht durchströmtem Wastegatekanal wirkt die beschriebene konzentrische Zuführung wie ein nachgeschalteter Stufendiffusor, was zu einer Erhöhung des Turbinenwirkungsgrads führt.

Die vorstehend beschriebene Ausgestaltung der Zuführung des Wastegatemassenstroms zum Abgasmassenstrom ist konstruktiv einfach und kostengünstig ausführbar. Bereits bestehende Komponenten können mit geringem Mehraufwand modifiziert werden. Zur Realisierung der Erfindung sind nur wenige neue Elemente erforderlich.

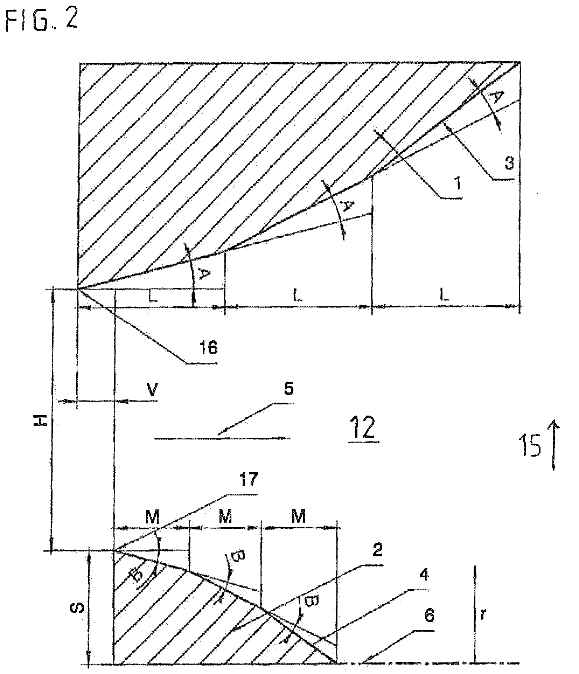

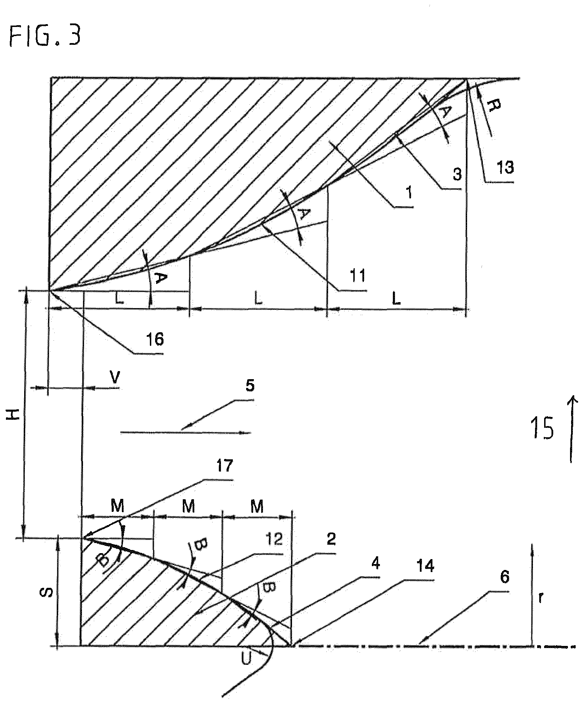

Bei dem anhand der Figur 1 erläuterten Ausführungsbeispiel sind in der gezeigten Schnittansicht die Diffusorkontur 3 und die Spinnerkontur 4 jeweils glatt ausgebildet. Bei den nachfolgend anhand der Figuren 2 und 3 erläuterten Ausführungsbeispielen weisen diese Konturen jeweils eine Anzahl von aufeinanderfolgenden konischen Segmenten auf.

Die Figur 2 zeigt eine schematische Schnittansicht eines Abgasaustrittskanals 12 zur Veranschaulichung eines zweiten Ausführungsbeispiels für die Erfindung, wobei in dieser Darstellung nur die Ausgestaltung des Diffusors dargestellt ist.

Insbesondere zeigt die Figur 2 einen Abgasaustrittskanal 12, welcher stromabwärts der Laufschaufeln des Turbinenrades angeordnet ist. Der Abgasaustrittskanal 12 ist radial außen durch einen axialen Turbinendiffusor 1 begrenzt. Ferner ist der Abgasaustrittskanal 12 radial innen durch einen Spinner 2 begrenzt.

Wie beispielhaft in der Figur 2 dargestellt ist, weist der axiale Turbinendiffusor 1 eine Anzahl N>1 von aufeinander folgenden konischen Diffusorsegmenten auf In der Figur 2 sind beispielhaft drei Diffusorsegmente dargestellt. In diesem Zusammenhang wird darauf hingewiesen, dass die in der Figur 2 dargestellte Ausführungsform mit drei Diffusorsegmenten nicht als einschränkend zu verstehen ist, sondern dass prinzipiell eine beliebige Anzahl N von Diffusorsegmenten größer oder gleich dem Wert 2 gewählt werden kann.

Ferner sind in der Figur 2 axiale Diffusoröffnungswinkel A zwischen den aufeinander folgenden Diffusorsegmenten dargestellt. Wie aus der Figur 2 hervorgeht, ist unter dem axialen Diffusoröffnungswinkel A zwischen den aufeinander folgenden Diffusorsegmenten derjenige Winkel zu verstehen, der sich am Übergang zwischen benachbarten Diffusorsegmenten ergibt. Typischerweise hat ein axialer Diffusoröffnungswinkel A zwischen aufeinander folgenden Diffusorsegmenten einen Wert von $A \geq 1,0°$, insbesondere $A \geq 2,5°$. Der Wert für die axialen Diffusoröffnungswinkel A zwischen benachbarten Diffusorsegmenten kann konstant sein oder unterschiedliche Werte haben. Beispielsweise können die Werte des Diffusoröffnungswinkels A zwischen aufeinander folgenden Diffusorsegmenten in Strömungsrichtung 5 zunehmen oder auch kleiner werden.

Wie beispielhaft in der Figur 2 dargestellt ist, weist der Spinner 2 eine Anzahl $P \geq 1$ von aufeinanderfolgenden konischen Spinnersegmenten auf. In der Figur 2 sind beispielhaft drei Spinnersegmente dargestellt. In diesem Zusammenhang wird darauf hingewiesen, dass die in der Figur 2 dargestellte Ausführungsform mit drei Spinnersegmenten nicht als einschränkend zu verstehen ist, sondern dass prinzipiell eine beliebige Anzahl P von Spinnersegmenten größer oder gleich dem Wert 1 gewählt werden kann.

Ferner sind in der Figur 2 axiale Spinneröffnungswinkel B zwischen den aufeinanderfolgenden Spinnersegmenten dargestellt. Wie aus der Figur 2 hervorgeht, ist unter dem axialen Spinneröffnungswinkel B zwischen den aufeinanderfolgenden Spinnersegmenten derjenige Winkel zu verstehen, der sich am Übergang zwischen benachbarten Spinnersegmenten ergibt.

Typischerweise hat ein axialer Spinneröffnungswinkel B zwischen aufeinanderfolgenden Spinnersegmenten einen Wert von $B \geq 1,0°$, insbesondere $B \geq 2,5°$. Der Wert für die axialen Spinneröffnungswinkel B zwischen benachbarten Spinnersegmenten kann konstant sein oder unterschiedliche Werte haben. Beispielsweise können die Werte des Spinneröffnungswinkels B zwischen aufeinanderfolgenden Spinnersegmenten in Strömungsrichtung 5 zunehmen oder auch kleiner werden.

Ferner sind in der Figur 2 die axiale Diffusorsegmentlänge L, die Eintrittshöhe H des Abgasaustrittskanals 12, der maximale Radius S des Spinners 2 und die axiale Spinnersegmentlänge M eingezeichnet. In diesem Zusammenhang wird angemerkt, dass die axiale Diffusorsegmentlänge L typischerweise konstant ist. Alternativ kann die axiale Diffusorsegmentlänge L in Strömungsrichtung 5 zunehmen oder in Strömungsrichtung 5 abnehmen. Ebenso ist typischerweise die axiale Spinnersegmentlänge M konstant. Alternativ kann die axiale Spinnersegmentlänge M in Strömungsrichtung 5 zunehmen oder in Strömungsrichtung 5 abnehmen.

Ein Verhältnis L/H zwischen der axialen Diffusorsegmentlänge L und der Eintrittshöhe H des Abgasaustrittskanals 15 weist typischerweise einen Wert von $L/H \geq 0,01$, insbesondere $L/H \geq 0,05$, auf.

Ein Verhältnis H/S zwischen der Eintrittshöhe H des Abgasaustrittskanals und des maximalen Radius S des Spinners 2 weist typischerweise einen Wert von $H/S \geq 1,0$, insbesondere $H/S \geq 1,3$, auf.

Ein Verhältnis M/H zwischen einer axialen Spinnersegmentlänge M und der Eintrittshöhe H des Abgasaustrittskanals 15 weist typischerweise einen Wert von $M/H \geq 0,01$, insbesondere $M/H \geq 0,05$, auf.

Gemäß einer Ausführungsform, die mit anderen hierin beschriebenen Ausführungsformen kombiniert werden kann, kann der Ausgangspunkt 16 der Diffusorkontur 3 am Eintritt zum Abgasaustrittskanal im Vergleich zum Ausgangspunkt 17 der Spinnerkontur 4 einen axialen Versatz V aufweisen, wie es beispielhaft in den Figuren 2 und 3 dargestellt ist. Der axiale Versatz V des Ausgangspunkts 16 der Diffusorkontur 3 relativ zum Ausgangspunkt 17 der Spinnerkontur 4 kann entgegen der Strömungsrichtung 5 vorgesehen sein, wie es beispielhaft in den Figuren 2 und 3 dargestellt ist. Alternativ kann der axiale Versatz V des Ausgangspunkts 16 der Diffusorkontur 3 relativ zum Ausgangspunkt 17 der Spinnerkontur 4 in Strömungsrichtung 5 vorgesehen sein (nicht explizit dargestellt). Insbesondere kann der Versatz V kleiner oder gleich der Hälfte der Eintrittshöhe des Abgasaustrittskanals sein, d.h. $V \leq H/2$.

Somit wird vorteilhafterweise eine Abgasturbine mit einem verbesserten Diffusordesign bereitgestellt, welches eine verbesserte Druckrückgewinnung am Abgasturbinenausgang ermöglicht.

Insbesondere wird die Druckrückgewinnung bzw. der Anstieg des statischen Drucks stromabwärts der Abgasturbine durch einen statischen (nicht drehenden) axialen Diffusor und einen rotierenden Spinner am Turbinenradauslass verbessert, wobei sowohl die Diffusorkontur als auch die Spinnerkontur derart ausgelegt sind, dass sich der Austrittsbereich, insbesondere der Abgasaustrittskanal, graduell vergrößert, wodurch vorteilhafterweise eine graduelle Erhöhung des statischen Drucks stromabwärts der Abgasturbine erreicht werden kann. Dies hat den Vorteil, dass die Strömungsgeschwindigkeit am Austritt der Abgasturbine sowie die kinetischen Energieverluste reduziert werden können. Insbesondere hat die erfindungsgemäße Abgasturbine den Vorteil, dass Expansionsverluste, wie sie beispielsweise bei den aus dem Stand der Technik bekannten Abgasturbinen durch unstetige und ungeführte Flächenänderungen im Abgasaustrittsbereich auftreten, eliminiert werden können und die Abgasströmung normalisiert wird. Ferner sei angemerkt, dass sich die in der erfindungsgemäßen Abgasturbine realisierbaren reduzierten Austrittsströmungsgeschwindigkeiten zudem vorteilhafterweise zu einer Reduktion von Druckverlusten in einem nachgeschalteten Rohrleitungssystem führen können.

Die Figur 3 zeigt eine schematische Schnittansicht eines Abgasaustrittskanals 15 einer Abgasturbine gemäß weiteren hierin beschriebenen Ausführungsformen. Auch in der Figur 3 ist nur die Ausgestaltung des Diffusors dargestellt.

Insbesondere zeigt Figur 3, dass gemäß einer Ausführungsform, die mit anderen hierin beschriebenen Ausführungsformen kombiniert werden kann, die aufeinander folgenden konischen Diffusorsegmente in ihrer Gesamtheit eine radial nach außen gerichtete Diffusorkontur 3 bereitstellen. Wie beispielhaft in Figur 3 dargestellt ist, kann die radial nach außen gerichtete Diffusorkontur 3 durch eine erste Splinekontur 11 geglättet sein. Dadurch kann die Druckrückgewinnung bzw. der Anstieg des statischen Drucks stromabwärts der Abgasturbine am Turbinenradauslass verbessert werden. Beispielsweise kann die erste Splinekontur 11 durch eine kreisförmige Kontur mit einem Radius R abgerundet sein, wobei der Radius R kleiner oder gleich der zweifachen Eintrittshöhe H des Abgasaustrittskanals ist (R ≤ 2H).

Des Weiteren zeigt Figur 3, dass gemäß einer Ausführungsform, die mit anderen hierin beschriebenen Ausführungsformen kombiniert werden kann, die aufeinander folgenden konischen Spinnersegmente eine radial nach Außen gerichtete Spinner-Kontur 4 bereitstellen. Wie beispielhaft in Figur 3 dargestcllt ist, kann die radial nach innen gerichtete Spinnerkontur 4 durch eine zweite Splinekontur 12 geglättet sein. Dadurch kann die Druckrückgewinnung bzw. der Anstieg des statischen Drucks stromabwärts der Abgasturbine am Turbinenradauslass verbessert werden. Beispielsweise kann die zweite Splinekontur 12 durch eine kreisförmige Kontur mit einem Radius U abgerundet sein, wobei der Radius U kleiner oder gleich dem maximalen Radius S des Spinners ist (U ≤ S).

Darüber hinaus zeigt Figur 3, dass gemäß einer Ausführungsform, die mit anderen hierin beschriebenen Ausführungsformen kombiniert werden kann, eine Kante 13 des letzten in Strömungsrichtung 5 angeordneten DiffusorSegments durch eine kreisförmige Kontur mit einem Radius R abgerundet sein kann. Dies wirkt sich vorteilhaft auf die Druckrückgewinnung aus. Typischerweise ist der Radius R kleiner oder gleich der zweifachen Eintrittshöhe H des Abgasaustrittskanals, d.h. R ≤ 2H.

Des Weiteren zeigt Figur 3, dass gemäß einer Ausführungsform, die mit anderen hierin beschriebenen Ausführungsformen kombiniert werden kann, eine Kante 14 des letzten in Strömungsrichtung 5 angeordneten SpinnerSegments durch eine kreisförmige Kontur mit einem Radius U abgerundet sein kann. Dies wirkt sich vorteilhaft auf die Druckrückgewinnung aus. Typischerweise ist der Radius U kleiner oder gleich dem maximalen Radius S des Spinners, d.h. U ≤ S.

Durch die anhand der Figuren 2 und 3 erläuterte schrittweise Öffnung des Diffusors wird eine axiale Kompaktheit des Diffusors sichergestellt. Diese axiale Kompaktheit ist für die Praxis von hoher Bedeutung, da die zur Verfügung stehenden Platzverhältnisse auf dem jeweiligen Motor beschränkt sind.

Wie aus den oben anhand der Figuren 1 - 3 beschriebenen Ausfuhrungsformen hervorgeht wird vorteilhafterweise eine Abgasturbine mit einem Diffusor und einem Wastegatekanal bereitgestellt, die gegenüber den aus dem Stand der Technik bekannten Abgasturbinen verbessert ist. Insbesondere wird durch die erfindungsgemäße Abgasturbine eine Abgasturbine mit einem verbesserten Diffusordesign bereitgestellt, welches eine verbesserte Druckrückgewinnung am Abgasturbinenausgang ermöglicht und des Weiteren ein ungehindertes Abströmen des Massenstroms durch die Turbine ermöglicht. Eine negative Rückwirkung in Form von Turbinenschaufelvibrationen wird dadurch ausgeschlossen, dass es zu keiner Behinderung des Abströmens kommt. Durch die beschriebene konstruktive Ausgestaltung wird sowohl die Wirkung des Diffusors als auch die Wirkung des Spinners positiv beeinflusst.

Vorteilhafterweise ist der Diffusor der erfindungsgemäßen Abgasturbine derart realisiert, dass dieser im Vergleich zu aus dem Stand der Technik bekannten Diffusoren von Abgasturbinen eine geringe Komplexität und Bauraumgrösse aufweist, was sich positiv auf die Herstellungskosten auswirkt.

Abschließend sei angemerkt, dass das hierin beschriebene Design des Diffusors und des optional vorgesehenen Spinners hinsichtlich der geforderten Dimensionierung entsprechend angepasst werden kann. Mit anderen Worten, das hierin beschriebene Design des Diffusors und des Spinners ist allgemein gültig und kann auf kleine, mittlere und große Bauraumgrößen übertragen werden.

**BEZUGZEICHENLISTE**

1  axialer Turbinendiffusor

1a  stromabwärtsseitiger, radial außenliegender Endbereich des Turbinendiffusors 1

1b  stromabwärtsseitiger, radial innenliegender Endbereich des Turbinendiffusors 1

2 Spinner
3 Diffusorkontur
3a fiktive verlängerte Diffusorkontur
4 Spinnerkontur
5 axiale Strömungsrichtung
6 Rotationsachse
7 Turbinenrad
8 Laufschaufel
9 Vorderkante der Laufschaufel 8
10 Hinterkante der Laufschaufel 8
11 Strömungsrichtung des Wastegatemassenstroms
12 Abgasaustrittskanal
13 Wastegatekanal
13a Ausgangsbereich des Wastegatekanals
13b stromabwärtsseitiger, radial innenliegender Endbereich des Wastegatekanals
13c stromabwärtsseitiger, radial außenliegender Endbereich des Wastegatekanals
14 Übergangswinkel
15 Radialrichtung
16 Ausgangspunkt der Diffusorkontur
17 Ausgangspunkt der Spinnerkontur
Y Wastegateöffnung in Radialrichtung
r radiale Richtung
H Eintrittshöhe des Abgasaustrittskanals
S maximaler Radius des Spinners
L axiale Diffusorsegmentlänge
A axialer Diffusoröffnungswinkel
N Anzahl von aufeinanderfolgenden konischen Diffusorsegmenten
R Abrundungsradius der Kante des letzten in Strömungsrichtung angeordneten Diffusorsegments bzw. der ersten Splinekontur
M axiale Spinnersegmentlänge
B Spinneröffnungswinkel
P Anzahl von aufeinanderfolgenden konischen Spinnersegmenten
U Abrundungsradius der Kante des letzten in Strömungsrichtung angeordneten Spinnersegments bzw. der zweiten Splinekontur
V axialer Versatz
Q Aussenradius am Turbinenrotoraustritt
Z Gesamtlänge des Diffusors
D Austrittsdurchmesser des Diffusors

**Patentansprüche**

1. Abgasturbine, aufweisend:

- ein Turbinenrad (7) mit einer Vielzahl von Laufschaufeln (8),
- einen Abgasaustrittskanal (12), welcher stromabwärts der Laufschaufeln des Turbinenrades angeordnet ist, wobei der Abgasaustrittskanal (12) radial außen durch einen axialen Turbinendiffusor (1) begrenzt ist und wobei durch den Abgasaustrittskanal (12) ein Abgasmassenstrom in einer axialen Strömungsrichtung (5) ausgebbar ist, und
- wobei der axiale Turbinendiffusor (1) sich stromabwärts radial nach außen mit nichtkonstantem Diffusor-Öffnungswinkel derart öffnet, dass ein erster Diffusor-Öffnungswinkel von einem zweiten Diffusor-Öffnungswinkel um mindestens 1° abweicht,
- einen Wastegatekanal (13), dessen Ausgangsbereich (13a) in den Diffusor oder direkt stromabwärts des Diffusors in den Abgasaustrittskanal (12) mündet und durch welchen ein Wastegatemassenstrom in den Abgasmassenstrom einblasbar ist, wobei der Wastegatekanal zum Erzeugen einer im Wesentlichen axialen Strömungsrichtung des Wastegatemassenstroms am Ausgangsbereich (13a) des Wastegatekanals (13) ausgebildet ist,
**dadurch gekennzeichnet, dass**
- der Turbinendiffusor (1) einen ersten Diffusor-Abschnitt mit ansteigendem Diffusor-Öffnungswinkel und einen gegenüber dem ersten Diffusor-Abschnitt stromabwärts gelegenen zweiten Diffusor-Abschnitt mit absinkendem Diffusor-Öffnungswinkel aufweist und
- ein in einem Übergangsbereich zwischen dem Turbinendiffusor (1) und einer radialen Innenwand des Wastegatekanals vorliegender Übergangswinkel (14) kleiner ist als 5°.

2. Abgasturbine nach Anspruch 1, bei welcher die Einblasung des Wastegatemassenstroms in den Abgasmassenstrom entlang des Umfangs des Wastegatekanals konzentrisch zu einer Rotationsachse (6) des Turbinenrads (7) oder segmentweise konzentrisch zur Rotationsachse des Turbinenrads oder durch Bohrungen des Turbinendiffusors, die voneinander beabstandet entlang des Umfangs des Wastegatekanals vorgesehen sind, erfolgt.

3. Abgasturbine nach Anspruch 1 oder 2, bei welcher der stromabwärtsseitige, radial außenliegende Endbereich (1a) des Turbinendiffusors (1) konzentrisch um die Rotationsachse (6) des Turbinenrads (7) verläuft.

4. Abgasturbine nach Anspruch 3, bei welcher der stromabwärtsseitige, radial außenliegende Endbereich (1a) des Turbinendiffusors (1) einen radial innenliegenden Endbereich (13b) des Wastegatekanals (13) bildet oder direkt an den radial innenliegenden Endbereich (13b) des Wastegatekanals (13) angrenzt.

5. Abgasturbine nach Anspruch 4, bei welcher der radial außenliegende Endbereich (13c) des Wastegatekanals (13) den radial innenliegenden Endbereich

(13b) des Wastegatekanals (13) in Stromabwärtsrichtung übersteht.

6. Abgasturbine nach einem der vorhergehenden Ansprüche, bei welcher der axiale Turbinendiffusor (1) eine Anzahl N>1 von aufeinanderfolgenden konischen Diffusorsegmenten aufweist oder bei welcher der Diffusor-Öffnungswinkel auf stetig differenzierbare Weise nicht-konstant verläuft.

7. Abgasturbine nach einem der vorhergehenden Ansprüche, bei welcher der Abgasaustrittskanal (12) radial innen teilweise durch einen Spinner (2) begrenzt ist.

8. Abgasturbine nach Anspruch 7, bei welcher der Spinner (2) als integrales Bauteil des Turbinenrads (7) ausgeführt ist oder als separates Bauteil auf die Turbinenradnabe aufgeschrumpft oder aufgeschraubt oder aufgepresst oder aufgecincht ist.

9. Abgasturbine nach einem der vorhergehenden Ansprüche, bei welcher der Übergangsbereich zwischen dem Turbinendiffusor (1) und der radialen Innenwand (13b) des Wastegatekanals (13) abgerundet ausgebildet ist.

10. Abgasturbine nach einem der vorhergehenden Ansprüche, bei welchem der erste Diffusor-Öffnungswinkel stromaufwärts des zweiten Diffusor-Öffnungswinkels angeordnet ist und größer als der zweite Diffusor-Öffnungswinkel ist.

11. Abgasturbine nach Anspruch 10, bei welcher der Ausgangsbereich (13a) des Wastegatekanals (13) in den zweiten Diffusor-Abschnitt oder stromabwärts des zweiten Diffusor-Abschnitts mündet.

12. Abgasturbine nach einem der vorhergehenden Ansprüche, bei welcher der Wastegatekanal durchströmbar oder nicht durchströmbar ist.

13. Abgasturbolader mit einer Abgasturbine nach einem der vorhergehenden Ansprüche.


**Claims**

1. Exhaust turbine, having:

   - a turbine wheel (7) having a plurality of rotor blades (8),
   - an exhaust outlet duct (12), which is arranged downstream of the rotor blades of the turbine wheel, wherein the exhaust outlet duct (12) is delimited radially on the outside by an axial turbine diffusor (1), and wherein an exhaust mass flow can be discharged in an axial direction of flow (5) through the exhaust outlet duct (12), and
   - wherein the axial turbine diffusor (1) opens downstream, radially outward, at a non-constant diffusor opening angle, in such a way that a first diffusor opening angle deviates from a second diffusor opening angle by at least 1°,
   - a waste gate duct (13), the outlet region (13a) of which opens into the diffusor or directly downstream of the diffusor into the exhaust outlet duct (12) and through which a waste-gate mass flow can be injected into the exhaust mass flow, wherein the waste gate duct is designed to generate a substantially axial direction of flow of the waste-gate mass flow at the outlet region (13a) of the waste gate duct (13),
   **characterized in that**
   - the turbine diffusor (1) has a first diffusor portion having an increasing diffusor opening angle and a second diffusor portion, located downstream of the first diffusor portion, having a decreasing diffusor opening angle, and
   - a transition angle (14) in a transition region between the turbine diffusor (1) and a radial inner wall of the waste gate duct is less than 5°.

2. Exhaust turbine according to Claim 1, in which the waste-gate mass flow is injected into the exhaust mass flow along the circumference of the waste gate duct concentrically with respect to an axis of rotation (6) of the turbine wheel (7) or in segments concentrically with respect to the axis of rotation of the turbine wheel or through bores in the turbine diffusor which are provided at a distance from one another along the circumference of the waste gate duct.

3. Exhaust turbine according to Claim 1 or 2, in which the downstream, radially outer end region (1a) of the turbine diffusor (1) extends concentrically around the axis of rotation (6) of the turbine wheel (7).

4. Exhaust turbine according to Claim 3, in which the downstream, radially outer end region (1a) of the turbine diffusor (1) forms a radially inner end region (13b) of the waste gate duct (13) or directly adjoins the radially inner end region (13b) of the waste gate duct (13).

5. Exhaust turbine according to Claim 4, in which the radially outer end region (13c) of the waste gate duct (13) projects beyond the radially inner end region (13b) of the waste gate duct (13) in the downstream direction.

6. Exhaust turbine according to any of the preceding claims, in which the axial turbine diffusor (1) has a number N>1 of successive conical diffusor segments, or in which the diffusor opening angle is non-constant in a continuously differentiable manner.

**7.** Exhaust turbine according to any of the preceding claims, in which the exhaust outlet duct (12) is partially delimited radially on the inside by a spinner (2) .

**8.** Exhaust turbine according to Claim 7, in which the spinner (2) is designed as an integral component of the turbine wheel (7) or is shrunk or screwed or pressed or cinched as a separate component onto the turbine wheel hub.

**9.** Exhaust turbine according to any of the preceding claims, in which the transition region between the turbine diffusor (1) and the radial inner wall (13b) of the waste gate duct (13) is of rounded design.

**10.** Exhaust turbine according to any of the preceding claims, in which the first diffusor opening angle is arranged upstream of the second diffusor opening angle and is greater than the second diffusor opening angle.

**11.** Exhaust turbine according to Claim 10, in which the outlet region (13a) of the waste gate duct (13) opens into the second diffusor portion or downstream of the second diffusor portion.

**12.** Exhaust turbine according to any of the preceding claims, in which there may or may not be flow through the waste gate duct.

**13.** Exhaust turbocharger having an exhaust turbine according to any of the preceding claims.


**Revendications**

**1.** Turbine à gaz d'échappement, présentant :

- une roue de turbine (7) avec une pluralité d'aubes mobiles (8),
- un canal de sortie de gaz d'échappement (12), qui est agencé en aval des aubes mobiles de la roue de turbine, le canal de sortie de gaz d'échappement (12) étant délimité radialement à l'extérieur par un diffuseur de turbine axial (1), et un flux massique de gaz d'échappement pouvant être distribué par le canal de sortie de gaz d'échappement (12) dans une direction d'écoulement axiale (5), et
- le diffuseur de turbine axial (l) s'ouvrant radialement en aval vers l'extérieur avec un angle d'ouverture de diffuseur non constant de telle sorte qu'un premier angle d'ouverture de diffuseur diffère d'un deuxième angle d'ouverture de diffuseur d'au moins 1°,
- un canal de wastegate (13), dont la zone de sortie (13a) débouche dans le diffuseur ou directement en aval du diffuseur dans le canal de sortie de gaz d'échappement (12) et à travers lequel un flux massique de wastegate peut être injecté dans le flux massique de gaz d'échappement, le canal de wastegate étant configuré pour produire une direction d'écoulement essentiellement axiale du flux massique de wastegate au niveau de la zone de sortie (13a) du canal de wastegate (13),
**caractérisé en ce que**
- le diffuseur de turbine (1) présente une première section de diffuseur avec un angle d'ouverture de diffuseur croissant et une deuxième section de diffuseur, située en aval par rapport à la première section de diffuseur, avec un angle d'ouverture de diffuseur décroissant, et
- un angle de transition (14) présent dans une zone de transition entre le diffuseur de turbine (1) et une paroi intérieure radiale du canal de wastegate est inférieur à 5°.

**2.** Turbine à gaz d'échappement selon la revendication 1, dans laquelle l'injection du flux massique de wastegate dans le flux massique de gaz d'échappement est effectuée le long de la circonférence du canal de wastegate concentriquement à un axe de rotation (6) de la roue de turbine (7) ou concentriquement par segments à l'axe de rotation de la roue de turbine ou à travers des alésages du diffuseur de turbine, qui sont prévus espacés les uns des autres le long de la circonférence du canal de wastegate.

**3.** Turbine à gaz d'échappement selon la revendication 1 ou 2, dans laquelle la zone d'extrémité radialement extérieure (1a) du diffuseur de turbine (1), située en aval, s'étend concentriquement autour de l'axe de rotation (6) de la roue de turbine (7).

**4.** Turbine à gaz d'échappement selon la revendication 3, dans laquelle le zone d'extrémité radialement intérieure (1a) du diffuseur de turbine (1), située en aval, forme une zone d'extrémité radialement intérieure (13b) du canal de wastegate (13) ou est directement adjacente à la zone d'extrémité radialement intérieure (13b) du canal de wastegate (13).

**5.** Turbine à gaz d'échappement selon la revendication 4, dans laquelle la zone d'extrémité radialement extérieure (13c) du canal de wastegate (13) dépasse la zone d'extrémité radialement intérieure (13b) du canal de wastegate (13) dans la direction en aval.

**6.** Turbine à gaz d'échappement selon l'une quelconque des revendications précédentes, dans laquelle le diffuseur de turbine axial (1) présente un nombre N > 1 de segments de diffuseur coniques successifs ou dans laquelle l'angle d'ouverture de diffuseur s'étend de manière non constante, différentiable en permanence.

**7.** Turbine à gaz d'échappement selon l'une quelconque des revendications précédentes, dans laquelle le canal de sortie de gaz d'échappement (12) est partiellement délimité radialement à l'intérieur par un spinner (2).

**8.** Turbine à gaz d'échappement selon la revendication 7, dans laquelle le spinner (2) est réalisé en tant que partie intégrante de la roue de turbine (7) ou est fretté ou vissé ou emmanché par pression ou sanglé sur le moyeu de la roue de turbine en tant que composant séparé.

**9.** Turbine à gaz d'échappement selon l'une quelconque des revendications précédentes, dans laquelle la zone de transition entre le diffuseur de turbine (1) et la paroi intérieure radiale (13b) du canal de wastegate (13) est configurée sous forme arrondie.

**10.** Turbine à gaz d'échappement selon l'une quelconque des revendications précédentes, dans laquelle le premier angle d'ouverture de diffuseur est agencé en amont du deuxième angle d'ouverture de diffuseur et est plus grand que le deuxième angle d'ouverture de diffuseur.

**11.** Turbine à gaz d'échappement selon la revendication 10, dans laquelle la zone de sortie (13a) du canal de wastegate (13) débouche dans la deuxième section de diffuseur ou en aval de la deuxième section de diffuseur.

**12.** Turbine à gaz d'échappement selon l'une quelconque des revendications précédentes, dans laquelle le canal de wastegate est traversable ou non traversable.

**13.** Turbocompresseur avec une turbine à gaz d'échappement selon l'une quelconque des revendications précédentes.

**FIG. 1**

FIG. 2

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017121337 A1
- EP 3358148 A2
- US 9739166 B1
- JP S5535383 U
- DE 3101131 A1